Europäisches Patentamt

(19) European Patent Office

Office européen des brevets

(11) Publication number: **0 071 347**
**A2**

(12) **EUROPEAN PATENT APPLICATION**

(21) Application number: 82303469.9

(51) Int. Cl.³: **C 08 F 8/36**

(22) Date of filing: 01.07.82

(30) Priority: 24.07.81 US 286631

(43) Date of publication of application:
09.02.83 Bulletin 83/6

(84) Designated Contracting States:
BE DE FR GB IT NL

(71) Applicant: Exxon Research and Engineering Company
P.O.Box 390 180 Park Avenue
Florham Park New Jersey 07932(US)

(72) Inventor: Thaler, Warren Alan
133 Deerfield Lane
Aberdeen New Jersey(US)

(74) Representative: Field, Roger Norton et al,
ESSO Engineering (Europe) Ltd. Patents & Licences
Apex Tower High Street
New Malden Surrey KT3 4DJ(GB)

(54) A process for sulfonation of aromatic-containing polymers.

(57) A process for forming a sulfonated aromatic polymer
includes the forming of a cement of the aromatic polymer in
a hydrocarbon solvent and then contacting of the cement of
the aromatic polymer with a sulfonating agent for a sufficient
period of time at a sufficient temperature to form a
sulfonated aromatic polymer having at least about 0.3%
sulfur incorporated therein, wherein the sulfonating agent is
hydrogencarbon soluble and is formed in a hydrocarbon
solvent by the reaction of $SO_3$ with a carboxylic acid having
at least about 8 carbon atoms.

The present invention relates to a process for the sulfonation of an aromatic polymer. The aromatic polymers which are hydrocarbon soluble and are sulfonated by the process of the present invention are derived from polystyrene-type thermoplastics polymers which are polystyrene, poly-t-butyl-styrene, polychlorostyrene, poly-alpha methyl styrene, isobutylene-styrene copolymers or hydrogenated block copolymers of styrene-butadiene or styrene-isoprene.

The polystyrene thermoplastics suitable for use in the practice of the invention have a glass transition temperature from 90°C to 150°C, more preferably, 90°C to 140°C and most preferably, 90°C to 120°C. These polystyrene resins have a weight average molecular weight, as measured by GPC, of 5,000 to 500,000, more preferably 20,000 to 350,000 and most preferably 90,000 to 300,000. These base polystyrene thermoplastic resins can be prepared directly by any of the known polymerization processes. The term thermoplastic is used in its conventional sense to mean a substantially rigid (flexus modulus $>$ 10,000 psi) material capable of retaining the ability to flow at elevated temperatures for relatively long times.

The preferred polystyrene thermoplastic resin is a homopolymer of styrene having a number average molecular weight of 180,000, and an intrinsic viscosity in toluene of 0.8. These polymers are widely available commercially in large volume. A suitable material is Styron 666 manufactured by Dow Chemical Co. number average, which affords a suitable molecular weight of 105,000.

In carrying out the present invention, the aromatic-containing polymer is dissolved in a critically selected class of hydrocarbon solvent to form a cement, wherein the solvent is non-reactive to the sulfonating agent and to the aromatic containing polymer. The solvent is selected from n-alkanes, iso-alkanes and cycloalkanes wherein the alkane has 5 to 20, more preferably 6 to 12 carbon atoms per molecule. Illustrative examples of these alkanes are n-hexane, isohexane, n-heptane, iso-heptane, cyclohexane, methylcyclohexane, cycloheptane, isopentane, n-pentane, and cyclopentane and mixtures thereof. The preferred solvent is cyclohexane. The concentration of the aromatic-containing polymer in the hydrocarbon solvent system is 2 to 25, more preferably 5 to 20, and most preferably 10 to 15 wt%.

To the cement of the aromatic-containing polymer and the hydrocarbon solvent system is added a hydrocarbon soluble acyl sulfate sulfonating agent at a temperature of $-100^{\circ}C$ to $100^{\circ}C$ for a period of time of 0.01 to 24 hours, more preferably at room temperature for 0.1 to 1.0 hours, and most preferably 0.1 to 0.5 hours. The sulfonating agent can be preformed prior to its addition to the cement of the aromatic-containing polymer either neat or in the hydrocarbon solvent system or alternatively, the sulfonating agent can be formed in situ in the cement of the aromatic-containing polymer. The sulfonating agent is formed by reacting $SO_3$ with a carboxylic acid having at least 8 carbon atoms, more preferably 8 to 40 carbon atoms and most preferably 12 to 22 carbon atoms per molecule, wherein the molar ratio of the $SO_3$ to the carboxylic acid is 1:1 to 1:10. Preferred carboxylic acids are lauric acid or stearic acid which form the hydrocarbon soluble acyl sulfate. When the sulfonating reagent is formed by reacting $SO_3$ with a carboxylic acid, it must be preformed since in situ generation gives carbonized and crosslinked polymer.

The sulfonation reaction of the aromatic-containing polymer is quenched with an aliphatic alcohol such as methanol, ethanol, iso-propanol, with an aromatic hydroxyl compound, such as phenol, a cyclo aliphatic alcohol such as cyclohexanol or with water. The unneutralized sulfonated aromatic-containing polymer has 5 to 150 meq. sulfonate groups per 100 grams of the sulfonated polymer, more preferably 10 to 40, and most preferably 12 to 35. The meq. of sulfonate groups per 100 grams of polymer is determined by both titration of the polymeric sulfonate and Dietert Sulfur analysis. In the titration of the sulfonate, the polymer is dissolved in solvent consisting of from 95 parts by volume of toluene and 5 parts by volume of methanol to 50 parts by volume of toluene and 50 parts by volume of methanol depending on the level of sulfonation. The sulfonation polymer is titrated with ethanolic sodium hydroxide.

The unneutralized sulfonated polymer is gel-free and hydrolytically stable. Gel is measured by stirring a given weight of polymer in the appropriate toluene methanol solvent at a concentration of 5 wt. % for 24 hours, allowing the mixture to settle or filtering through a fine mesh screen, withdrawing a weighed sample of the supernatant solution and evaporating to dryness.

Hydrolytically stable means that the acid function, in this case the sulfonic acid, will not be eliminated under neutral or slightly basic conditions to a neutral moiety which is incapable of being converted to highly ionic functionality.

The unneutralized sulfonated aromatic polymer is neutralized by the addition of a solution of a basic salt to the unneutralized sulfonated polymer dissolved in the mixture of the aliphatic alcohol and nonreactive hydrocarbon solvent system or alternatively, neutralization can be readily effected by employing ammonia or a primary, secondary or tertiary aliphatic amine or an aromatic amine or a quaternary ammonium base. The basic salt is dissolved in a binary solvent system consisting of water and/or aliphatic alcohol. The counterion of the basic salt is selected from ammonium, iron, antimony, aluminium, lead or Groups I-A, II-A, I-B or II-B of the Periodic Table of Elements and mixtures thereof. The anion of the basic salt is selected from a carboxylic acid having from 1 to 4 carbon atoms per molecule, a hydroxide or alkoxide and mixtures thereof. The preferred neutralizing agent is a metal acetate, more preferably zinc acetate. Sufficient metal salt of the carboxylic acid is added to the solution of the unneutralized sulfonated polymer to effect neutralization. It is preferable to neutralize at least 95% of the sulfonate groups, more preferably 98%, most preferably 100%. Ammonia or amines may be added either in a liquid or gaseous form or in a solvent such as an alcohol.

In the practice of this invention, it is desirable to utilize a reaction hydrocarbon solvent which is a good solvent for both the aromatic-containing polymer and the hydrocarbon soluble acyl sulfate, wherein the acyl sulfate is formed from the reaction product of $SO_3$ and the carboxylic acid having at least 8 carbon atoms per molecule. While any number of inert hydrocarbons are good solvents for the polymer, they do not dissolve acetyl sulfate except at extremely low concentrations. While this is sufficient for very reactive EPDM's containing ENB and is the basis for such patent art for sulfonating these polymers, it is not effective for less reactive aromatic-containing polymers. Some chlorinated solvents are good solvents for acetyl sulfate and the aromatic-containing polymer and can be used to sulfonate the polymers; however, the process, as described in the present invention, provides high conversion and is more economical.

The advantages of the present process in forming a sulfonated aromatic-containing polymer can readily be appreciated by reference to the following examples and tables. As clearly illustrated in the following examples, unless the critically selected solvent system is employed in the formation of the cement of the aromatic-containing polymer, sulfonation is very sluggish requiring heating or prolonged reaction times and even then, some aromatic-containing polymers exhibit very little sulfonation. Thus, the employment of hydrocarbon solvents and acetyl sulfate generally valuable for sulfonating ENB-containing EPDM's are ineffective for sulfonating aromatic-containing polymers and for EPDM's containing dicyclopentadiene. However, sulfonation is rapid and effective for aromatic-containing polymers and EPDM's containing dicyclopentadiene and 1,4-hexadiene even at ambient temperatures when the hydrocarbon solvent and a hydrocarbon soluble acyl sulfate of the present invention are utilized.

### EXAMPLE 1

A customary technique for sulfonating EPDM terpolymers is to dissolve the polymer in a hydrocarbon solvent, add excess acetic anhydride, followed by sulfuric acid to generate acetyl sulfate in situ. This example shows that this same procedure is not effective with a hydrocarbon solution of polystyrene.

For each 100 grams of polystyrene (Styron 666) dissolved in cyclohexane at 50°C, 60 mmole of acetic anhydride was added followed by 37.5 mmole sulfuric acid. The polymer was isolated after 1 hour, washed with isopropyl alcohol in a blender, dried in vacuo and analyzed by titration and elemental sulfur analysis to determine the extent of sulfonic acid formation on the polymer.

The resulting product had 0.22% sulfur, corresponding to 6.86 mmole (meq.)/100 grams polymer. Titration indicated 6.92 meq. acid/100 grams. Thus, only low levels of sulfonation could be obtained by this procedure.

### EXAMPLE 2

Sulfonation of Polystyrene in Cyclohexane Using
Acetyl Sulfate Generated from Acetic Acid and $SO_3$

For each 100 grams of polystyrene in 500 ml cyclohexane at 50°C, reagent was prepared by dissolving 60 mmole of acetic acid in 100 ml cyclohexane (ambient temp.) and adding 37.5 mmole of sulfur trioxide ($SO_3$). A dark, viscous oil precipitated from the solution. The contents of the flask were transferred with difficulty to the polymer cement. At the end of 1 hour, the polymer was isolated and analyzed as before.

The resulting product had a sulfur analysis of 0.15%, 4.52 mmole per 100 grams of polymer.

### EXAMPLE 3

Sulfonation Of Polystyrene In Cyclohexane Using *(Weight)*
Higher Molecular Carboxylic Acids

Reagent prepared similarly from lauric acid (dodecanoic acid) or stearic acid (octadecanoic acid)

and SO$_3$ was soluble in cyclohexane. According to the method of Example 2, the reagent consisting of 100 ml cyclohexane, 60 mmole lauric acid, and 37.5 mmole SO$_3$ was combined with 100 grams of polystyrene in 500 ml cyclohexane at 50°C, and the product isolated after 1 hour. The product had a 0.78% sulfur, 24.0 mmole/100 grams polymer. Titration indicated 20.35 mmole of sulfonic acid/100 grams of polymer.

According to the method of Example 2, the reagent consisted of 100 ml cyclohexane, 60 mmole stearic acid, and 37.5 mmole SO$_3$. The reagent was combined with 100 grams polystyrene in 500 ml cyclohexane (50°C) and the polymer isolated after 1 hour. The product had 0.4% S, 20.0 mmole. Titration indicated 19.74 mmole of acid.

## EXAMPLE 4

### Sulfonation Capability Of Lauric ACID-SO$_3$ On Polystyrene In Cyclohexane (50°C)

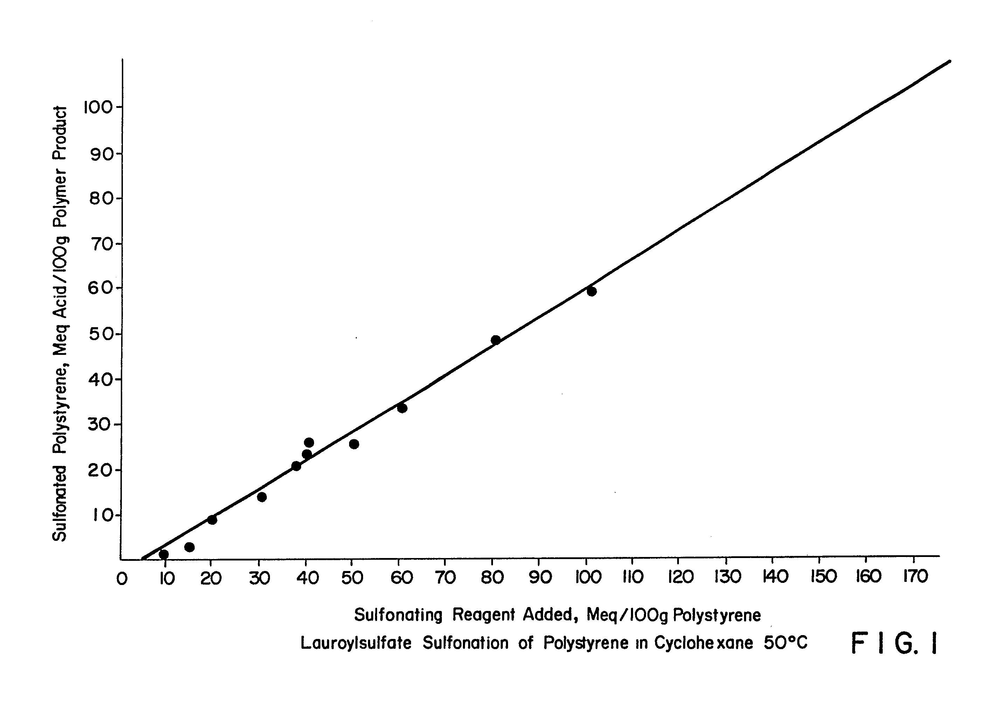

According to the method of Example 3, a range of sulfonated polystyrenes were prepared using lauric acid + SO$_3$ dissolved in cyclohexane. The results are shown in Table I and are plotted in Figure 1. In all cases, soluble polymer products were produced which were redissolved and titrated. The titration results are compared to elemental analysis (meq. = mmole).

At 60 mmole SO$_3$ added per 100 grams polymer, the solutions became extremely viscous during the reaction. Below this level of reagent, the polymer solutions were homogeneous and quite tractable.

## TABLE I

### Sulfonation of Polystyrene in Cyclohexane (50°C) With Lauric Acid-$SO_3$ in Cyclohexane

| $SO_3$ [a] Meq./100 grams Polystyrene | Theory Meq./100 grams Sulfonated Polystyrene | Analyses | | |
|---|---|---|---|---|
| | | Titration Meq./100 grams | Microanalysis | |
| | | | % S | Meq./100 grams |
| 15 | 14.8 | 3.0 | 0.14 | 4.4 |
| 20 | 19.7 | 9.0 | 0.37 | 11.5 |
| 30 | 29.3 | 14.0 | 0.48 | 15.0 |
| 37.5 | 36.4 | 20.4 | 0.78 | 24.0 |
| 40 | 38.8 | 23.7 | 0.77 | 23.9 |
| 50 | 48.1 | 25.6 | 0.86 | 26.8 |
| 60 | 57.2 | 33.7 | 1.05 | 32.7 |
| 80 | 75.2 | 47.6 | 1.53 | 47.7 |
| 100 | 92.6 | 59.1 | 1.90 | 59.3 |
| 200 | 172.4 | 100.8 | 3.16 | 98.6 |
| 300 | 241.9 | 142.0 | 4.51 | 140.7 |

(a)   1.6 moles lauric acid:   1.0 mole $SO_3$

EXAMPLE 5

Attempts to prepare soluble acyl sulfates were made using 32 meq. of the following carboxylic acids dissolved in 50 ml. cyclohexane by adding 20 meq. of $SO_3$ and observing the solubility at ambient temperature. The products from acetic, propionic, butyric, valeric, hexanoic and cyclohexane carboxylic acid formed substantially insoluble acyl sulfates. The acyl sulfates precipitated from solution and behaved as viscous liquids which were difficult to transfer. The lower the molecular weight or the carboxylic acid the more the difficulty in suspending and handling the acyl sulfate.

Carboxylic acids at about 8 carbons gave homogeneous solutions of the corresponding acyl sulfates which were readily transferred and gave homogeneous sulfonation reaction when combined with polystyrene dissolved in warm cyclohexane.

Thus, octaonoic acid, lauric acid, and stearic acid gave soluble acyl sulfates which sulfonate polystyrene rapidly and uniformly in cyclohexane solution.

EXAMPLE 6

Effect of Lauric Acid/$SO_3$ (moles) Ratio
on Polystyrene Sulfonation

For each 100 grams polystyrene dissolved in cyclohexane at 50°C, reagent was prepared as follows:

(1) 40 mmole $SO_3$ added to 20 mmole lauric acid in 100 ml cyclohexane.

(2) 40 mmole $SO_3$ added to 40 mmole lauric acid in 100 ml cyclohexane.

(3) 40 mmole $SO_3$ added to 64 mmole lauric acid in 100 ml cyclohexane.

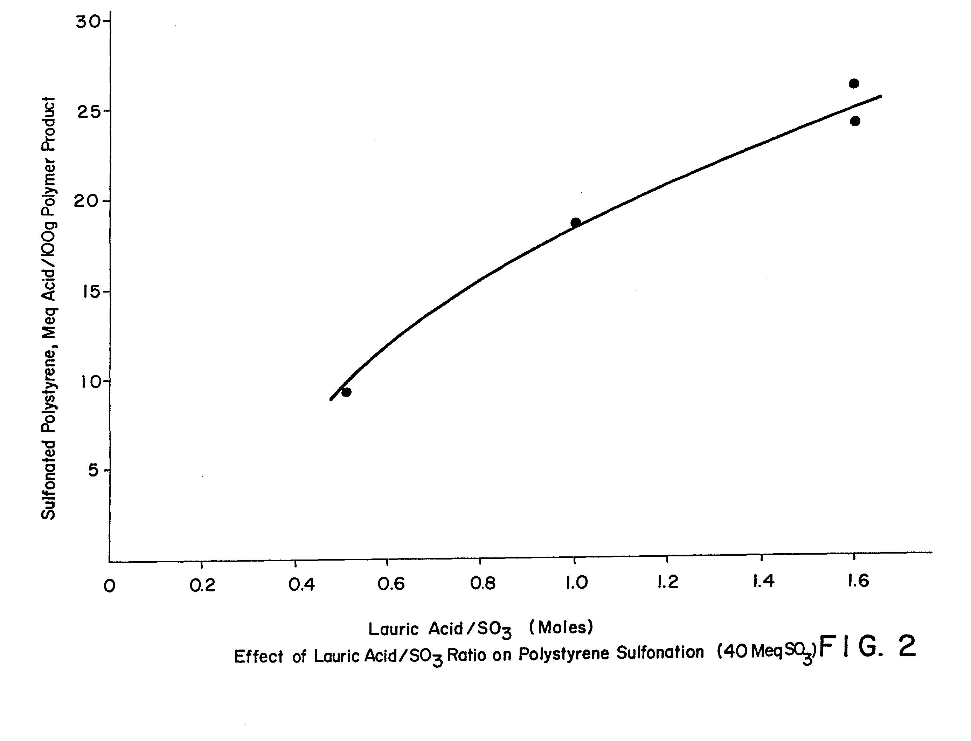

The reagent was added to each polymer solution and the products recovered and analyzed. The results (Figure 2) show that the lauric acid is critical and the sulfonation improves with increasing lauric acid concentrations. At 0.5 lauric to $SO_3$, the reaction is not completely homogeneous.

## CLAIMS

1. A process for forming a sulfonated aromatic-containing polymer comprising:

(a)  forming a cement of the aromatic-containing polymer in a non-reactive hydrocarbon solvent system; and

(b)  contacting said cement of said aromatic-containing polymer with a hydrocarbon soluble acyl sulfate sulfonating agent for a sufficient period of time at a sufficient temperature to form said sulfonated aromatic-containing polymer having at least about 5 meq. sulfonate groups per 100 grams of sulfonated aromatic-containing polymer, wherein said acyl sulfate is formed from the reaction product of $SO_3$ and a carboxylic acid having at least 8 carbon atoms per molecule.

2. A process according to claim 1, wherein such sulfonating agent is formed prior to addition of said cement.

3. A process according to either of claims 1 and 2, which includes the steps of:

(a)  quenching said cement; and

(b)  neutralizing said sulfonated aromatic-containing polymer with a neutralizing agent.

4. A process according to claim 3, wherein said neutralizing agent is an organic amine, a hydroxide, carbonate, alkoxide or a carboxylate of ammonium or a metal selected from iron, aluminium, antimony, lead or Groups I-A, II-A, I-B and II-B of the Periodic Table of Elements and mixtures thereof.

5. A process according to any one of the preceding claims wherein said hydrocarbon solvent is an n-alkane, iso-alkane or cycloalkane or a mixture thereof.

6.   A process according to claim 5, wherein said cycloalkane is cyclohexane.

7.   A process according to any one of the preceding claims, wherein said aromatic-containing polymer is poly-t-butyl-styrene, polychlorostyrene, polyalpha ethyl styrene  or a hydro-genated block copolyer of sytrene-butadiene or styrene-isoprene.

8.   A process according to any one of claims 1 to 6, wherein said aromatic-containing polymer is an isobutylene-styrene polymer.

9.   A process according to any one of claims 1 to 6, wherein said aromatic-containing polymer is polystyrene.

10.  A process according to any one of claims 1 to 6, wherein said aromatic-containing polymer is a butadiene-styrene polymer.

Lauroylsulfate Sulfonation of Polystyrene in Cyclohexane 50°C

FIG. 1

Lauric Acid/SO$_3$ (Moles)

Effect of Lauric Acid/SO$_3$ Ratio on Polystyrene Sulfonation (40 Meq SO$_3$)

FIG. 2